(19) Europäisches Patentamt
European Patent Office
Office européen des brevets

(11) EP 3 677 424 B1

(12) # EUROPEAN PATENT SPECIFICATION

(45) Date of publication and mention of the grant of the patent:
**11.09.2024 Bulletin 2024/37**

(21) Application number: **18850944.2**

(22) Date of filing: **16.08.2018**

(51) International Patent Classification (IPC):
***C08J 7/048*** *(2020.01)*

(52) Cooperative Patent Classification (CPC):
**C08J 7/0423; B32B 9/00; B65D 65/40; C08J 7/048;**
C07F 7/04; C08G 77/02; C08J 2367/02;
C08J 2429/04; C08J 2483/04; C08L 83/02;
C08L 101/00; Y02E 10/50

(86) International application number:
**PCT/JP2018/030427**

(87) International publication number:
**WO 2019/044525 (07.03.2019 Gazette 2019/10)**

(54) **LAMINATE AND SEALING MEMBER USING SAME**

LAMINAT UND DICHTUNGSELEMENT UNTER VERWENDUNG DAVON

STRATIFIÉ ET ÉLÉMENT D'ÉTANCHÉITÉ L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2017 JP 2017165214**
**30.08.2017 JP 2017165215**

(43) Date of publication of application:
**08.07.2020 Bulletin 2020/28**

(73) Proprietor: **Toray Advanced Film Co., Ltd.**
**Chuo-ku**
**Tokyo 103-0021 (JP)**

(72) Inventors:
- **SATO, Yoshikazu**
**Otsu-shi**
**Shiga 520-8558 (JP)**
- **YAMADA, Emi**
**Otsu-shi**
**Shiga 520-8558 (JP)**

(74) Representative: **Mewburn Ellis LLP**
**Aurora Building**
**Counterslip**
**Bristol BS1 6BX (GB)**

(56) References cited:
**JP-A- 2000 185 375**
**JP-A- 2004 083 749**
**JP-A- 2004 250 477**
**JP-A- 2006 082 319**
**JP-A- 2007 210 262**
**US-A1- 2017 009 034**

EP 3 677 424 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a laminate having excellent oxygen and water vapor barrier properties even after high temperature hot water treatment and a sealing member using the same.

### BACKGROUND ART

Various packaging materials have been used to package various items such as foods/beverages, pharmaceuticals, and daily necessaries, but these packaging materials are required to have good oxygen barrier properties and water vapor barrier properties in order to prevent deterioration of their contents. Aluminum foil is one of the packaging materials having excellent gas barrier properties, but aluminum foil tends to undergo pinholes and can serve only for limited applications. In addition, they are disadvantageous in terms of invisibility of the contents and unsuitability for use in a microwave oven.

In order to solve these problems, laminates with gas barrier properties having polyvinylidene chloride (PVDC), ethylene-vinyl alcohol copolymer (EVOH), etc., on a resin film such as polyester have been used. However, while PVDC have limited gas barrier properties and moldability, EVOH is poor in water vapor barrier properties and easily dissolves in hot water at a high temperature although excellent in oxygen barrier properties in a dry state.

There is a proposal of vapor-deposited films that have a vapor-deposited layer of an inorganic oxide such as, for instance, aluminum oxide and silicon oxide formed on a film of polyester etc. by vacuum deposition etc. Since these inorganic oxides are transparent, they ensure visibility and can serve for cooking in a microwave oven, but there is a problem of significant deterioration in gas barrier properties that may be caused when the inorganic oxide layer is exposed directly to high temperature hot water.

To solve this, some documents have disclosed barrier films with improved gas barrier properties that are produced by forming a layer of an inorganic compound such as silicon oxide and aluminum oxide on a resin film such as polyester and coating it with a polymer to form a gas barrier layer that protects the inorganic compound layer (Patent Documents 1 to 4).

U S2017/0009034 A1 concerns a gas barrier film having a base material made of a polymer resin composition, on which is layered a nanocomposite film comprising dispersed polymer microcrystals and a network structure of siloxane bonds stably holding them.

### PRIOR ART DOCUMENTS

### PATENT DOCUMENTS

Patent document 1: JP 2013-202822 A
Patent document 2: JP 2015-193193 A
Patent document 3: JP 2008-264998 A
Patent document 4:JP 2007-290292 A

### SUMMARY OF INVENTION

### PROBLEMS TO BE SOLVED BY THE INVENTION

In Patent document 1, a gas barrier layer is formed as a first layer on a base, and a gas barrier coat layer containing a water soluble polymer and a silicon compound is formed thereon as a second layer to form a gas barrier laminated film. In Patent document 2, a vapor-deposited aluminum oxide film is formed on a base film, and a layer containing a siloxane based Si-O-Si bond network structure and water soluble polymer crystallites is formed thereon to produce a gas barrier film. In Patent documents 3 and 4, a vapor-deposited inorganic oxide layer is formed on a base, and a gas barrier coat film composed mainly of a multimeric compound containing a hydrolysate of a metal alkoxide and a water soluble polymer such as polyvinyl alcohol and ethylene-vinyl alcohol is formed thereon to produce a gas barrier laminated film. However, none of the patent documents consider the structures of the polymer components and the films fail to have sufficiently high water resistance depending on the water soluble polymer component used, leading to an unresolved problem of poor gas barrier properties particularly after high temperature hot water treatment.

In view of this problem, an object of the present invention is to provide a method for stable production of a

laminate having excellent gas barrier properties particularly after high temperature hot water treatment, which is achieved by clarifying a preferred state of the laminate.

MEANS OF SOLVING THE PROBLEMS

This is a laminate including a base film in combination with an inorganic compound layer and a protective layer formed in this order on at least one side of the base film, the protective layer containing a vinyl alcohol based resin, and the vinyl alcohol based resin containing a cyclic compound structure having a carbonyl group in the cyclic structure. The protective layer is an organic-inorganic mixed layer containing a linear polysiloxane, and when examining the protective layer by the FT-IR method, the value given by equation (1) wherein ν1 represents the peak intensity attributed to Si-O-Si bonding, ν2 the peak intensity attributed to Si-OH bonding, and T (nm) the average thickness of the protective layer, is 0.005 or more and 0.030 or less.

$$(\nu 1/\nu 2)\ /\ T \qquad \text{Equation (1)}$$

ν1: intensity of the peak in the range from 1,050 to 1,090 $cm^{-1}$
ν2: intensity of the peak in the range from 950 to 970 $cm^{-1}$

ADVANTAGEOUS EFFECTS OF THE INVENTION

The present invention can provide a laminate having excellent oxygen and water vapor barrier properties even after high temperature hot water treatment.

DESCRIPTION OF PREFERRED EMBODIMENTS

The laminate according to the present invention is described in more detail below.

The laminate according to the present invention is a laminate including a base film in combination with an inorganic compound layer and a protective layer formed in this order on at least one side of the base film, the protective layer containing a vinyl alcohol based resin, and the vinyl alcohol based resin containing a cyclic compound structure having a carbonyl group in the cyclic structure. The protective layer is an organic-inorganic mixed layer containing a linear polysiloxane, and when examining the protective layer by the FT-IR method, the value given by equation (1) wherein ν1 represents the peak intensity attributed to Si-O-Si bonding, ν2 the peak intensity attributed to Si-OH bonding, and T (nm) the average thickness of the protective layer, is 0.005 or more and 0.030 or less.

$$(\nu 1/\nu 2)\ /\ T \qquad \text{equation (1)}$$

ν1: intensity of the peak in the range from 1,050 to 1,090 $cm^{-1}$
ν2: intensity of the peak in the range from 950 to 970 $cm^{-1}$

For the laminate according to the present invention, it is presumed as follows: the water resistance is improved because the protective layer present on the inorganic compound layer contains a vinyl alcohol based resin with the vinyl alcohol based resin containing, as a specific structure, a cyclic compound structure having a carbonyl group in the cyclic structure while a protective layer of a dense, low-hydrophilicity structure is formed because a linear polysiloxane is further contained as a specific silicon compound to realize a bonding state where the value of the above formula (1) is 0.005 or more and 0.030 or less, thereby allowing the laminate to exhibit good gas barrier properties even after high temperature hot water treatment as a result of reducing the interaction with gas molecules such as oxygen and water vapor and blocking the permeation path of the gas molecules.

[Base Film]

There are no specific limitations on the base film according to the present invention, and examples thereof include polyester based resins such as polyethylene terephthalate, polyethylene-2,6-naphthalate, polypropylene terephthalate, and polybutylene terephthalate; polyolefin based resins such as polyethylene, polystyrene, polypropylene, polyisobutylene, polybutene, and polymethylpentene; and others such as cyclic polyolefin based resins, polyamide based resins, polyimide based resins, polyether based resins, polyesteramide based resins, polyetherester based resins, acrylic resins, polyurethane based resins, polycarbonate based resins, and polyvinyl chloride based resins. In particular, the

use of a polyester film is preferred from the viewpoint of good adhesion to inorganic compound layers and handleability. The base film may be either a cast film or an oriented (uniaxial or biaxial) film, but the use of a biaxially oriented film is preferred from the viewpoint of thermal dimensional stability.

There are no specific limitations on the thickness of the base film, but it is preferably 1 μm or more and 100 μm or less, more preferably 5 μm or more and 50 μm or less, and still more preferably 10 μm or more and 30 μm or less.

The surface of the base film may be subjected to corona treatment, ozone treatment, plasma treatment, glow discharge treatment, or the like as necessary in order to improve the adhesion with the inorganic compound layer.

[Inorganic compound layer]

The inorganic compound layer according to the present invention contains an inorganic compound. Examples of the inorganic compound include aluminum, magnesium, titanium, tin, indium, silicon, and oxides thereof, which may be used alone or as a mixture of two or more thereof. The inorganic compound layer may include a metal such as aluminum, but more preferably includes a metal oxide or a metal nitride. It is preferable for the inorganic compound layer to contain a metal oxide or a metal nitride because gas barrier properties will develop easily after high temperature hot water treatment. The useful metal oxides include, for example, aluminum oxide, magnesium oxide, titanium oxide, tin oxide, indium oxide alloy, silicon oxide, and silicon oxynitride, and the useful metal nitrides include aluminum nitride, titanium nitride, and silicon nitride. These inorganic compounds may be used alone or as a mixture of two or more thereof. Among others, the use of aluminum oxide is preferred from the viewpoint of processing costs and gas barrier properties.

There are no specific limitations on the method to be used for forming an inorganic compound layer, and useful methods include generally known methods such as evaporation, sputtering, ion plating, and plasma vapor deposition, of which vacuum evaporation is preferred from the viewpoint of productivity.

The inorganic compound layer preferably has a thickness of 5 nm or more and 100 nm or less. If it is less than 5 nm, sufficiently good gas barrier properties will not develop in some cases. On the other hand, if the thickness is more than 100 nm, the inorganic compound layer may be cracked in some cases.

[Protective layer]

The protective layer contains a vinyl alcohol based resin, and the vinyl alcohol based resin has a cyclic compound structure having a carbonyl group in the cyclic structure. Furthermore, it is preferably an organic-inorganic mixed layer containing linear polysiloxane as an inorganic component. Since the vinyl alcohol based resin contains a cyclic compound structure having a carbonyl group in the cyclic structure, a film becomes hydrophobic brought about by the cyclic structure, and moreover, a film having a dense structure is formed as a result of interaction around the resin by the carbonyl group , leading to an improved water resistance. In addition, since a linear polysiloxane is contained as the inorganic component to form and fix a network in the organic-inorganic mixed layer, the movement of the molecular chains of the components of the organic-inorganic mixed layer can be suppressed and the expansion of the permeation paths of oxygen and water vapor due to environmental changes such as in temperature can be suppressed, which is thought to act to form a protective layer having a dense structure with low hydrophilicity. This is expected to serve to reduce the interaction with gas molecules such as oxygen and water vapor and block the permeation paths of the gas molecules, thereby leading to excellent gas barrier properties even after high temperature hot water treatment.

Examples of the vinyl alcohol based resin include, for example, polyvinyl alcohol, ethylene-vinyl alcohol copolymer, and modified polyvinyl alcohol, and these resins may be used alone or as a mixture of two or more thereof. In particular, polyvinyl alcohols (including modified polyvinyl alcohol), which are generally obtainable by saponifying polyvinyl acetate, may be either partially saponified (achieved by saponifying part of the acetic acid groups) or completely saponified, but a higher degree of saponification is more preferable. The degree of saponification is preferably 90% or more and more preferably 95% or more. If the degree of saponification is low and acetic acid groups with large steric hindrance are contained in a large amount, the free volume of the layer may increase in some cases. The degree of polymerization of the polyvinyl alcohol is preferably 1,000 or more and 3,000 or less, and more preferably 1,000 or more and 2,000 or less.. When the degree of polymerization is low, the polymer will not be fixed easily and the gas barrier properties after the high temperature hot water treatment may deteriorate in some case.

For the present invention, the vinyl alcohol based resin is one that contains a cyclic compound structure having a carbonyl group in the cyclic structure as described above. There are no specific limitations on the cyclic structure as long as its ring has three or more members (e.g., three to six membered rings), and it may be a cyclic compound structure such as a heterocyclic ring containing, for example, a hetero element other than carbon, such as nitrogen, oxygen, sulfur, and phosphorus, in the cyclic structure. The portion that has the cyclic compound structure may exist in any of the main chain, a side chain, and a branched chain of the vinyl alcohol based resin. Specific examples of the cyclic compound structure having a carbonyl group in the cyclic structure include, for example, a lactone structure, i.e., a cyclic ester, and a lactam structure, i.e., a cyclic amide. Such structures may be contained alone, or two or more thereof may be contained

together, and are not particularly limited, but preferably lactone structures. Lactone structures are stable against the acid catalysts used for high temperature hot water treatment and the alkoxysilane hydrolysis treatment described later, and serve effectively to maintain gas barrier properties. Compounds having lactone structures include, for example, α-acetolactone, β-propiolactone, γ-butyrolactone, and δ-valerolactone.

For the present invention, useful methods for producing a vinyl alcohol based resin containing a cyclic compound structure having a carbonyl group in the cyclic structure include, but not limited to, the method disclosed in Published Japanese Translation of PCT International Publication JP 2010-533760 in which an ester bond is formed by reacting a carboxyl group with the hydroxyl group in the main chain of a vinyl alcohol based resin, the method disclosed in Japanese Unexamined Patent Publication (Kokai) No. 2003-105154 in which vinyl monomers having specific cyclic compound structural groups are copolymerized, and the method disclosed in Japanese Unexamined Patent Publication (Kokai) No. HEI-8-151411 in which a specific lactone is reacted directly with a vinyl alcohol based resin.

A linear polysiloxane is represented by the following chemical formula (1), wherein n in the chemical formula (1) is an integer of 2 or more. R in chemical formula (1) is, for example, a lower alkyl group such as methyl group, ethyl group, n-propyl group, and n-butyl group, or a branched alkyl group such as iso-propyl group and t-butyl group. Since linear polysiloxanes have few pores in their molecular chains, allowing the molecular chains to exist at high density, it is considered that the paths for movements of oxygen and water vapor can be blocked to realize better gas barrier properties. For the present invention, n is preferably 5 or more, and more preferably 10 or more, because a linear polysiloxane having a longer straight chain structure can more easily form a network and can be immobilized in the protective layer.

[Chemical compound 1]

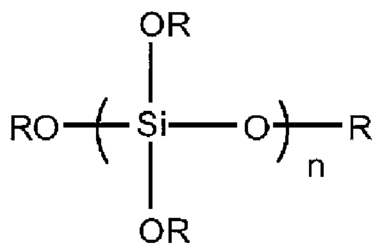

chemical formula (1)

A linear polysiloxane can be produced from an alkoxysilane represented as $Si(OR)_4$. R in the alkoxysilane is preferably a lower alkyl group such as methyl group, ethyl group, n-propyl group, and n-butyl group. Specific examples of the alkoxysilane include tetramethoxysilane (TMOS, tetramethyl orthosilicate, hereinafter occasionally referred to as methyl silicate), tetraethoxysilane (TEOS, tetraethyl orthosilicate, hereinafter occasionally referred to as ethyl silicate), tetrapropoxysilane, and tetrabutoxysilane, which may be used alone or as a mixture of two or more thereof.

The alkoxysilane is hydrolyzed in the presence of water, a catalyst, and an organic solvent to obtain a linear polysiloxane. The amount of water used for the hydrolysis is preferably 0.8 equivalent or more and 5 equivalents or less relative to the alkoxy group of the $Si(OR)_4$. If the amount of water is less than 0.8 equivalent, hydrolysis may not proceed sufficiently, failing to produce a linear polysiloxane in some cases. If the amount of water is more than 5 equivalents, the reaction of the alkoxysilane may proceed randomly to form a large amount of non-linear polysiloxanes, and it may not be possible to obtain a linear polysiloxane in some cases.

The catalyst used for the hydrolysis is preferably an acid catalyst. Examples of the acid catalysts include, but not limited to, hydrochloric acid, sulfuric acid, nitric acid, phosphoric acid, acetic acid, and tartaric acid. In general, the hydrolysis and polycondensation of an alkoxysilane can proceed with either an acid catalyst or a base catalyst, but when an acid catalyst is used, the monomers in the system are apt to be hydrolyzed averagely and are apt to form a linear structure. In the case of using a base catalyst, on the other hand, hydrolysis and polycondensation of alkoxides bonded to the same molecule can easily proceed in the reaction mechanism of this case and accordingly, the reaction proceeds randomly, possibly leading to reaction products that contain a large number of voids. The amount of the catalyst used is preferably 0.1 mol% or more and 0.5 mol% or less relative to the total molar quantity of the alkoxysilane.

Examples of the organic solvent used for the hydrolysis include alcohols, such as methyl alcohol, ethyl alcohol, n-propyl alcohol, isopropyl alcohol, and n-butyl alcohol, that can mix with water and alkoxysilane.

The hydrolysis temperature is preferably 20°C or more and 45°C or less. If the reaction is performed at less than 20°C, the reactivity will be low and the hydrolysis of $Si(OR)_4$ will not proceed smoothly. If the reaction is performed at a temperature of more than 45°C, on the other hand, the hydrolysis and polycondensation reactions can proceed rapidly to cause gelation or produce a non-linear, random and loose polysiloxane.

Here, as the linear polysiloxane, a commercially available silicate oligomer material in which a plurality of

$Si(OR)_4$ units are bonded together may be used. For the present invention, the protective layer may further contain alkoxysilane (or a hydrolysate of alkoxysilane) in addition to the vinyl alcohol based resin and linear polysiloxane.

When the protective layer for the present invention is examined by the FT-IR method, equation (1) wherein ν1 represents the peak intensity attributed to Si-O-Si bonding, v2 the peak intensity attributed to Si-OH bonding, and T (nm) the average thickness of the protective layer should give a value of 0.005 or more and 0.030 or less.

$$(\nu 1/\nu 2) / T \qquad \text{equation (1)}$$

ν1: intensity of the peak in the range from 1,050 to 1,090 $cm^{-1}$
v2: intensity of the peak in the range from 950 to 970 $cm^{-1}$

Here, the Si-OH bond forms a Si-O-Si bond by undergoing a dehydration condensation reaction and accordingly, the numerator (v1/v2) in equation (1) represents the degree of progress of the dehydration condensation reaction. Therefore, as a result of intensive investigation, the present inventors considered that a larger value of (v1/v2) indicates, as an index, that the reaction has progressed to a larger degree and that the protective layer has a denser structure. On the other hand, unreacted residual Si-OH bonds exist in the case of dehydration condensation reaction, and these unreacted residual Si-OH bonds can interact with gas molecules such as of water vapor through hydrogen bonding etc., thereby affecting the gas barrier properties. Even in cases where the degree of progress of the dehydration condensation reaction is the same (that is, the value of (v1/v2) is the same), the absolute quantity of unreacted residual Si-OH bonds increases with an increasing average thickness T, accordingly having a larger influence on the gas barrier properties. As a result of intensive investigation, the inventors found that equation (1), which gives the quotient of (ν1/ν2), i.e., the degree of progress of the dehydration condensation reaction, divided by the average thickness T, serves as an index that takes into account both the degree of progress of the dehydration condensation reaction per unit thickness and the unreacted residual Si-OH bonds, and therefore decided to use equation (1) as a gas barrier performance index of the protective layer that takes into account both the denseness of the protective layer showing the effect of blocking the permeation paths of gas molecules (i.e., the (v1/v2) ratio showing the degree of progress of the dehydration condensation reaction) and the quantity of unreacted residual Si-OH bonds showing the effect of interaction with gas molecules such as of oxygen and water vapor. Accordingly, if a bonding state where the value of equation (1) is 0.005 or more and 0.030 or less is realized, good gas barrier properties will be developed even after high temperature hot water treatment. The value of equation (1) is preferably 0.010 or more and 0.025 or less, and more preferably 0.015 or more and 0.020 or less.

A good method for realizing a bonding state where the value of equation (1) for the protective layer is 0.005 or more and 0.030 or less is to appropriately adjust the content ratio of the vinyl alcohol based resin, which is the organic component of the protective layer, the linear polysiloxane, and the hydrolysate of alkoxysilane described above. When the quantities of the linear polysiloxane and alkoxysilane are represented in terms of $SiO_2$, the total weight ratio of the inorganic component, which is the ratio between the organic component and the inorganic component, is preferably in the range of 15/85 to 85/15, more preferably in the range of 20/80 to 65/35, and more preferably in the range of 20/80 to 35/65. The total weight content in terms of $SiO_2$ is calculated by converting the total number of moles of silicon atoms contained in the linear polysiloxane and alkoxysilane to represent the weight of $SiO_2$ and expressed as the ratio of organic component/inorganic component (weight ratio). If this value exceeds 85/15, the organic component cannot be immobilized and the gas barrier properties may decline in some cases. If it is less than 15/85, on the other hand, the proportion of the inorganic component will be so high that the layer becomes stiff, leading to cracks that may deteriorate the gas barrier properties in some cases. Here, the content of the organic component and the inorganic component in a protective layer can be measured by the method described later.

Furthermore, another effective method is to appropriately adjust the mixing ratio of the linear polysiloxane and alkoxysilane in the inorganic component, and the ratio of linear polysiloxane/alkoxysilane, which is the weight ratio between the linear polysiloxane and the alkoxysilane calculated in terms of $SiO_2$, is preferably in the range of 15/85 to 90/10, more preferably in the range of 50/50 to 85/15, and still more preferably in the range of 60/40 to 85/15. If this value exceeds 90/10, stronger interaction will occur among linear polysiloxane molecules and the organic component cannot be immobilized, leading to deterioration in the gas barrier properties in some cases. If it is less than 15/85, on the other hand, the number of Si-OH bonds attributed to the alkoxysilane will increase and accordingly, it will be difficult to adjust the value of equation (1), leading to an increase in the hydrophilicity and deterioration in the gas barrier properties in some cases. The mixing ratio of the linear polysiloxane and the alkoxysilane in the inorganic component can be measured by the method described later.

Another good method for realizing a bonding state where the value of equation (1) for the protective layer is 0.005 or more and 0.030 or less is to add heat to accelerate the polycondensation reaction of the linear polysiloxane and the alkoxysilane in the protective layer. As the polycondensation reaction proceeds, the numbers of alkoxy groups and/or hydroxy groups contained in the linear polysiloxane or the alkoxysilane decrease and the hydrophilicity declines,

making it possible to reduce the interaction with water molecules. In addition, as the polycondensation reaction proceeds, the molecular weights of the linear polysiloxane and alkoxysilane will increase and accordingly, the ability to immobilize the organic component will improve. Therefore, it is preferable that the temperature of the protective layer is as high as possible because the gas barrier properties can be improved by adding heat to accelerate the reaction. If the temperature is more than 200°C, however, the base film may shrink due to heat, or the inorganic compound layer may be distorted or cracked, thereby decreasing the gas barrier properties in some cases.

The protective layer can be produced by coating an inorganic compound layer with a coating solution containing a vinyl alcohol based resin as an organic component and a linear polysiloxane and alkoxysilane (or a hydrolysate of alkoxysilane) as an inorganic component (hereinafter referred to as organic-inorganic mixed coating solution), followed by drying. Therefore, the drying temperature for the coating film, which is a temperature to add heat to accelerate the polycondensation reaction, is preferably 100°C or more and 200°C or less, more preferably 120°C or more and 180°C or less, and more preferably 150°C or more and 180°C or less. When the temperature is less than 100°C, the water contained as a solvent as described later will not evaporate sufficiently, leaving the layer uncured in some cases.

The organic-inorganic mixed coating liquid can be obtained by mixing a solution prepared by dissolving an organic component in water or a water-alcohol mixed solvent and a solution containing a linear polysiloxane and an alkoxysilane. Examples of the alcohol used as the solvent include, for example, methyl alcohol, ethyl alcohol, n-propyl alcohol, isopropyl alcohol, and n-butyl alcohol.

There are no specific limitations on the method used to coat the inorganic compound layer with the organic-inorganic mixed coating liquid, and known methods such as the direct gravure method, reverse gravure method, microgravure method, rod coating method, bar coating method, die coating method, and spray coating method can be used.

The protective layer according to the present invention may contain a leveling agent, crosslinking agent, curing agent, adhesive, stabilizer, ultraviolet light absorber, antistatic agent, and the like, unless the gas barrier properties are impaired. Examples of the crosslinking agent include metal alkoxides of aluminum, titanium, zirconium, or the like, and complexes thereof.

It is preferable for the protective layer to have an average thickness T of 10 nm or more and 1,000 nm or less, more preferably 100 nm or more and 600 nm or less, and still more preferably 350 nm or more and 500 nm or less. If the average thickness T is less than 10 nm, pinholes and cracks in the inorganic compound layer will not be filled completely and a sufficiently high gas barrier function will not be realized in some cases. If the thickness is more than 1,000 nm, on the other hand, cracks will occur due to the large thickness, or curing will not be achieved sufficiently due to difficulty in adjusting the value of the equation (1), leading to deterioration in the gas barrier properties in some cases.

As described above, the condensation reaction is accelerated by heating to allow the protective layer to have improved gas barrier properties. Therefore, it is also preferable to further heat-treat the laminate after forming the protective layer in order to improve the gas barrier properties. The heat treatment temperature is preferably 30°C or more and 100°C or less, and more preferably 40°C or more and 80°C or less. The heat treatment period is preferably 1 day or more and 14 days or less, and more preferably 3 days or more and 7 days or less. When the heat treatment temperature is less than 30°C, the available heat energy will be less than necessary for promoting the reaction and fail to have a sufficiently large effect in some cases, whereas when it is more than 100°C, curling of the base, formation of oligomers, etc., will occur or the costs for equipment, manufacturing, etc., will increase in some cases.

[Analysis of laminate]

A method of calculating the value of the equation (1) for the protective layer of the present invention will be described below.

The intensity ν1 of the peak attributed to the Si-O-Si bond and the intensity v2 of the peak attributed to the Si-OH bond in the protective layer are measured by the FT-IR method (Fourier transform infrared spectroscopy). Although the intensity ν1 of the peak attributed to the Si-O-Si bond and the intensity v2 of the peak attributed to the Si-OH bond may fluctuate depending on the components and structure of the protective layer, the intensity of the peak in the wave number region of 1,050 to 1,090 $cm^{-1}$ and the intensity of the peak in the wave number region of 950 to 970 $cm^{-1}$ are used as v1 and v2, respectively. In the case where separate confirmation performed based on a similar spectrum taken from the base film alone shows that v1 or v2 overlaps a peak attributed to the base film, the difference between the spectrum measured in the same manner from the base film alone and the spectrum from the laminate obtained above is examined, and the intensities of the corresponding peaks existing in the above wave number regions are determined from the difference in spectrum and used as the values of ν1 and v2.

To determine the average thickness T of a protective layer, its cross section is observed using a transmission electron microscope (hereinafter abbreviated as TEM). To section a sample, an appropriate method may be selected depending on the type of the sample and the average thickness T, and good methods include the FIB method, which will be described later, and the use of a microtome having a diamond knife.

The presence of a linear polysiloxane in the protective layer according to the present invention can be determined

by laser Raman spectroscopy. In laser Raman spectroscopy, Raman bands of the linear polysiloxane, a random network structure containing a five or more membered cyclic structure and a branch, and a four membered cyclic structure are observed in the range of 400 to 500 $cm^{-1}$ to show the bonding state of the linear polysiloxane and alkoxysilane (or hydrolysate of alkoxysilane). As these Raman bands overlap each other, the four membered cyclic structure is observed as a band at 495 $cm^{-1}$, the linear polysiloxane as a band at 488 $cm^{-1}$, and the random network structure as a broad band extending below 450 $cm^{-1}$ because it is not a single ordered structure, and accordingly, they can be fitted based on Gaussian approximation to separate the peaks.

As a result of the above analysis, the A2/A1 ratio where A1 is the area of the Raman band attributed to the random network structure while A2 is the area of the Raman band attributed to the linear polysiloxan represents the mixing ratio of the linear polysiloxane to the alkoxysilane (weight ratio in terms of $SiO_2$).

A method for determining the content ratio of the organic component and the inorganic component in a protective layer is described below. The quantity of the inorganic component including the linear polysiloxane and alkoxysilane (and hydrolysate of alkoxysilane) can be represented by the quantity of silicon as described above, and the quantity of silicon can be determined by fluorescent X-ray analysis. First, five kinds of reference samples having known different quantities of silicon are prepared, and fluorescent X-ray analysis of each sample is performed. For fluorescent X-ray analysis, fluorescent X-ray unique to each element is generated by X-ray irradiation and detected. Since the quantity of X-ray generated is proportional to the quantity of the element contained in the sample under analysis, the X-ray intensity S (unit: cps/μA) of silicon determined by the measurement is proportional to the quantity of silicon. Here, the thickness of a reference sample is calculated by the same method as used above for the average thickness T and the X-ray intensity S determined by the fluorescent X-ray analysis is divided by the thickness of the reference sample to calculate the X-ray intensity S per unit thickness, followed by plotting the known quantity of silicon and the X-ray intensity S per unit thickness to prepare a calibration curve. Subsequently, for the laminate of the present invention, the same procedure is performed to determine the X-ray intensity S per unit thickness from fluorescent X-ray analysis results and the average thickness T, and the quantity of silicon is calculated from the calibration curve and the value obtained above. The total number of moles of the silicon atom contained in the linear polysiloxane and alkoxysilane is determined from this silicon quantity and converted into a weight of $SiO_2$, from which the total weight proportion S of the inorganic component is calculated to determine the content ratio of organic component/inorganic component.

[Applications]

The laminate of the present invention can be suitably used as a gas barrier film due to the excellent gas barrier properties maintained even after high temperature hot water treatment, and also as a sealing member produced therefrom.

A typical example of such a sealing member has a structure in which a skin material such as biaxially oriented polyester film, biaxially oriented polyamide film, and biaxially oriented polypropylene film is bonded to the protective layer side of the laminate of the present invention by the dry lamination method, extrusion lamination method, or the like, while a cast polyolefin film is bonded to the base film side as a sealant layer also by the dry lamination method or the like.

EXAMPLES

The present invention will now be illustrated in more detail with reference to Examples, but it should be understood that the invention is not construed as being limited thereto.

(1) Component analysis and structure identification for protective layer

The protective layer was peeled off from the sample and dissolved in an appropriate solvent. Using, if necessary, a generally known chromatographic technique such as silica gel column chromatography, gel permeation chromatography, and high performance liquid chromatography, the components contained in the protective layer were separated into single materials, which were then refined. Subsequently, DMSO-$d_6$ was added to each material and heated to 60°C to ensure dissolution, and the resulting solution was subjected to nuclear magnetic resonance spectroscopy, namely, $^{1}$H-NMR and $^{13}$C-NMR analysis. Each single material was then subjected to qualitative analysis by an appropriate combination of IR (infrared spectroscopy), various mass spectrometry methods (gas chromatography-mass spectrometry (GC-MS), pyrolysis gas chromatography-mass spectrometry (pyrolysis GC-MS), matrix assisted laser desorption ionization mass spectrometry (MALDI-MS), time-of-flight mass spectrometry (TOF-MS), time-of-flight matrix assisted laser desorption ionization mass spectrometry (MALDI-TOF-MS), dynamic secondary ion mass spectrometry (dynamic-SIMS), and time-of-flight secondary ion mass spectrometry (TOF-SIMS) to identify the components contained in the sample and to identify its structure. When these qualitative analyses were combined, a combination of as few methods as possible was adopted preferentially.

(2) Measurement of (ν1/ν2)/T of protective layer

The intensity ν1 of the peak attributed to the Si-O-Si bond and the intensity v2 of the peak attributed to the Si-OH bond in a protective layer was measured by the FT-IR method (Fourier transform infrared spectroscopy). Specifically, the laminate was cut to provide a 10 mm × 10 mm sample, and the surface of the protective layer was pressed onto ATR crystal, followed by taking measurements under reduced pressure under the following measuring conditions. The ν1/ν2 ratio was calculated using the maximum value in the wavenumber region of 1,050 to 1,090 $cm^{-1}$ as the intensity ν1 of the peak attributed to the Si-O-Si bond and using the maximum value in the wavenumber region of 950 to 970 $cm^{-1}$ as the intensity v2 of the peak attributed to the Si-OH bond. A total of 5 samples were examined in the same way, and the average value was calculated for a total of 5 points to represent the ν1/ν2 ratio.

The measuring conditions used were as described below.

- Equipment: Fourier transform infrared spectrophotometer FT/IR-6100 (manufactured by JASCO Corporation)
- Light source: standard light source
- Detector: GTS
- Resolution: 4 $cm^{-1}$
- Cumulative number of times of measurement: 256
- Measuring method: attenuated total reflection (ATR)
- Wave number range for measurement: 4,000 to 600 $cm^{-1}$
- ATR crystal: Ge prism
- Incidence angle: 45°

To determine the average thickness T of a protective layer, its cross section was then observed by TEM. First, specimens for cross-sectional observation were prepared by the FIB technique using Microsampling System (FB-2000A, manufactured by Hitachi, Ltd.) (specifically, according to the procedure described in "Kobunshi Hyomen Kako-Gaku" (Polymer Surface Processing), Satoru Iwamori, pp. 118-119). Then, TEM (H-9000UHRII, manufactured by Hitachi, Ltd.) was used to perform observation at an acceleration voltage of 300 kV, and here the cross-sectional observation was performed with the observing magnification adjusted so that the thickness of the layer accounts for 30% to 70% of the image obtained by the observation. A total of 5 samples were examined in the same way, and the average thickness T, expressed in nm, was calculated.

The value of ν1/ν2 obtained above was divided by the average thickness T to give the value of (ν1/ν2)/T to be used for the present invention.

(3) Measurement of the content ratio of organic component/inorganic component in protective layer Films were prepared by mixing polyvinyl alcohol (hereinafter occasionally referred to as PVA, polymerization degree 1,700, saponification degree 98.5%) as the organic component and the hydrolysate of tetraethoxysilane as the inorganic component in such a manner that the content ratio of the organic component to the inorganic component (inorganic component converted in terms of $SiO_2$ by weight) was 80/20, 65/35, 50/50, 35/65, or 20/80 to provide reference samples with different content ratios.

Then, each reference sample was examined by a fluorescent X-ray analyzer (EDX-700, manufactured by Shimadzu Corporation) to measure the intensity of the characteristic X-ray Kα of silicon, and then the X-ray intensity S (units: cps/μA) was determined. After measuring the thickness of each reference sample by the method described in (2) above, the X-ray intensity S per unit thickness was calculated, and a calibration curve for the content ratio of organic component/inorganic component (inorganic component converted in terms of $SiO_2$ by weight) was prepared.

Then, for the laminate of the present invention, the X-ray intensity S per unit thickness was determined from fluorescent X-ray analysis results and the average thickness T in the same manner as above, and the content ratio of organic component/inorganic component was obtained from the calibration curve.

(4) Analysis of bonding state of silicon (mixing ratio of linear polysiloxane/alkoxysilane (weight ratio in terms of $SiO_2$))

The protective layer of the laminate was separated by cutting and analyzed by Raman spectroscopy under the following conditions:

- Measuring equipment: T-6400, manufactured by Jobin Yvon/Atago Bussan Co., Ltd.
- Measuring mode: micro-Raman spectroscopy
- Objective lens: × 100
- Beam diameter: 1 μm
- Light source: $Ar^+$ laser / 514.5 nm
- Laser power: 200 mW

- Diffraction grating: single 600 gr/mm
- Slit: 100 μm
- Detector: CCD, manufactured by Jobin Yvon, 1,024 × 256

The area A1 representing the random network structure of alkoxysilane and the area A2 representing the linear polysiloxane were determined from Raman spectrum analysis performed under the conditions given below:
The Raman spectrum obtained was analyzed using a spectrum analysis program GRAMS/Thermo Scientific. The Raman spectrum was corrected for the baseline by linear approximation and then fitted in the range of 600-250 $cm^{-1}$. The fittings was performed to separate it into the following three components: a four membered cyclic structure (peak wave number 495 $cm^{-1}$, half width 35 $cm^{-1}$), linear polysiloxane (peak wave number 488 $cm^{-1}$, half width 35 $cm^{-1}$), and a random network structure of alkoxysilane. Since the random network structure of alkoxysilane gives a broad peak reflecting its continuous structure, automatic fitting was performed on the assumption of separation into three components, including four membered cyclic structure and linear polysiloxane, based in Gaussian function approximation. The areas of the regions surrounded by the bands obtained and the baseline were calculated, and the value of A2/A1 (mixing ratio of linear polysiloxane/alkoxysilane (weight ratio in terms of $SiO_2$)), where A1 is the area representing the random network structure of alkoxysilane and A2 is the area representing the linear polysiloxane, was calculated.

(5) Oxygen transmission rate

The oxygen transmission rate was measured under the conditions of a temperature of 23°C and a humidity of 90%RH using an oxygen permeability measuring apparatus (OX-TRAN (registered trademark) 2/21) manufactured by Mocon. Two test pieces were prepared and two measurements were taken from each of them, followed by calculating the average of the total of four measurements to represent the oxygen transmission rate.

(6) Water vapor transmission rate

The water vapor transmission rate was measured under the conditions of a temperature of 40°C and a humidity of 90%RH using a water vapor permeability measuring apparatus (PERMATRAN (registered trademark) -W 3/31) manufactured by Mocon. Two test pieces were prepared and two measurements were taken from each of them, followed by calculating the average of the total of four measurements to represent the water vapor transmission rate.

(7) Retorting treatment (high temperature hot water treatment)

To prepare a sample for retorting treatment, a polyester based adhesive for dry lamination (DIC Dry (registered trademark) LX-500/KO55, manufactured by DIC Graphics Corporation) was applied over one side of a biaxially oriented nylon film (Emblem (registered trademark) [brand name Type NO: ONUM], manufactured by Unitika Ltd., thickness 15 μm) in such a manner that the solid content would be 3.0 $g/m^2$, and then they were combined with a cast polypropylene film (Trephan (registered trademark), Type NO, ZK100, manufactured by Toray Advanced Film Co., Ltd., thickness 60 μm). Then, a polyester based adhesive for dry lamination was applied in a similar way to the surface of the biaxially oriented nylon film opposite to the surface coated with the cast polypropylene film, and combined with the protective layer surface of the laminate of the present invention. Subsequently, aging treatment was performed at a temperature of 40°C for 72 hours to obtain a sample for retorting treatment.
Then, the sample for retorting treatment was retorted in a high-temperature autoclave at 135°C for 30 minutes using a hot autoclave.

[Example 1]

<Inorganic compound layer>

A biaxially oriented polyethylene terephthalate film having a thickness of 12 μm (Lumirror (registered trademark) P60, manufactured by Toray Industries, Inc.) was used as the base film, and an aluminum oxide layer having a thickness of 15 nm was formed by vacuum evaporation to provide an inorganic compound layer.

<Solution of organic component>

A modified polyvinyl alcohol containing a γ-butyrolactone structure having a carbonyl group in its cyclic structure (hereinafter occasionally referred to as modified PVA, polymerization degree 1,700, saponification degree 93.0%), used as the vinyl alcohol based resin, was poured in a solvent consisting of water and isopropyl alcohol mixed at 97/3 by

weight, and heated and stirred at 90°C to obtain an organic component solution having a solid content 10 wt%.

Here, the fact that the modified polyvinyl alcohol in the protective layer had a γ-butyrolactone structure was confirmed by the following method.

The protective layer was peeled off, heated at 60°C to 80°C with DMSO-$d_6$ to ensure dissolution, subjected to DEPT135 measurement by $^1$H-NMR and $^{13}$C-NMR.

Based on results of $^1$H-NMR, the signal appearing at 0.8 and 1.0 ppm was identified as a peak attributed to the methylene group in the cyclic structure of γ-butyrolactone. The signal appearing at 2.3 ppm was identified as a peak attributed to the methylene group adjacent to the carbonyl group in the cyclic structure of γ-butyrolactone.

Based on results of $^{13}$C-NMR, the signal appearing at 74 ppm was identified as a peak attributed to the methylene group in the cyclic structure of γ-butyrolactone. The signal appearing at 174 ppm was identified as a peak attributed to the carbonyl group in the cyclic structure of γ-butyrolactone. The signal appearing at 45 ppm was identified as a peak attributed to the methylene group adjacent to the carbonyl group in the cyclic structure of γ-butyrolactone.

<Inorganic component solution>

To a solution prepared by mixing 11.2 g of linear polysiloxane (Ethyl Silicate 40, manufactured by Colcoat Co., Ltd., ethyl silicate oligomer, pentamer on average) and 16.9 g of methanol, 7.0 g of a 0.06 N aqueous hydrochloric acid solution was dropped to obtain a hydrolyzed solution of ethyl silicate pentamer.

<Organic-inorganic mixed layer>

A modified PVA solution and an inorganic component solution were mixed and stirred so that the weight ratio between the solid content of the modified PVA and the solid content in terms of $SiO_2$ (solid content by weight of the modified PVA/solid content by weight in terms of $SiO_2$) would be 85/15, followed by dilution with water to obtain a coating solution having a solid content of 12 wt%. This coating solution was applied on the inorganic compound layer and dried at 130°C to form an organic-inorganic mixed layer, thereby obtaining a laminate.

[Example 2]

A laminate was obtained in the same manner as in Example 1 except that an inorganic component solution was prepared and used by the following procedure.

<Inorganic component solution>

To a solution prepared by mixing 11.7 g of TEOS and 4.7 g of methanol, 18.6 g of a 0.02 N aqueous hydrochloric acid solution was dropped while stirring to obtain a hydrolyzed solution of TEOS. Elsewhere, to a solution prepared by mixing 11.2 g of linear polysiloxane (Ethyl Silicate 40, manufactured by Colcoat Co., Ltd., ethyl silicate oligomer, pentamer on average) and 16.9 g of methanol, 7.0 g of a 0.06 N aqueous hydrochloric acid solution was dropped to obtain a hydrolyzed solution of ethyl silicate pentamer. The hydrolyzed solution of ethyl silicate pentamer and the hydrolyzed solution of TEOS were mixed so that the weight ratio of their solid contents in terms of $SiO_2$ would be 15/85 to provide an inorganic component solution.

[Example 3]

A laminate was obtained in the same manner as in Example 1 except that the inorganic component solution and the coating solution for organic-inorganic mixed layer formation were as follows.

<Inorganic component solution>

An inorganic component solution was obtained in the same manner as in Example 2 except that the weight ratio of the solid contents in terms of $SiO_2$ between the hydrolyzed solution of ethyl silicate pentamer and the hydrolyzed solution of TEOS was 90/10.

<Organic-inorganic mixed layer>

The weight ratio between the solid content of the modified PVA and the solid content in terms of $SiO_2$ (solid content by weight of the modified PVA/solid content by weight in terms of $SiO_2$) was adjusted to 15/85.

[Example 4]

A laminate was obtained in the same manner as in Example 3 except that the coating solution for organic-inorganic mixed layer formation was as follows.

<Organic-inorganic mixed layer>

The weight ratio between the solid content of the modified PVA and the solid content in terms of $SiO_2$ (solid content by weight of the modified PVA/solid content by weight in terms of $SiO_2$) was adjusted to 20/80.

[Example 5]

A laminate was obtained in the same manner as in Example 1 except that the inorganic component solution and the coating solution for organic-inorganic mixed layer formation were as follows.

<Inorganic component solution>

An inorganic component solution was obtained in the same manner as in Example 2 except that the weight ratio of the solid contents in terms of $SiO_2$ between the hydrolyzed solution of ethyl silicate pentamer and the hydrolyzed solution of TEOS was 50/50.

<Organic-inorganic mixed layer>

The weight ratio between the solid content of the modified PVA and the solid content in terms of $SiO_2$ (solid content by weight of the modified PVA/solid content by weight in terms of $SiO_2$) was adjusted to 65/35.

[Example 6]

A laminate was obtained in the same manner as in Example 1 except that the inorganic component solution and the coating solution for organic-inorganic mixed layer formation were as follows.

<Inorganic component solution>

An inorganic component solution was obtained in the same manner as in Example 2 except that the weight ratio of the solid contents in terms of $SiO_2$ between the hydrolyzed solution of ethyl silicate pentamer and the hydrolyzed solution of TEOS was 85/15.

<Organic-inorganic mixed layer>

The weight ratio between the solid content of the modified PVA and the solid content in terms of $SiO_2$ (solid content by weight of the modified PVA/solid content by weight in terms of $SiO_2$) was adjusted to 35/65.

[Example 7]

A laminate was obtained in the same manner as in Example 1 except that the inorganic component solution and the coating solution for organic-inorganic mixed layer formation were as follows.

<Inorganic component solution>

An inorganic component solution was obtained in the same manner as in Example 2 except that the weight ratio of the solid contents in terms of $SiO_2$ between the hydrolyzed solution of ethyl silicate pentamer and the hydrolyzed solution of TEOS was 60/40.

<Organic-inorganic mixed layer>

The weight ratio between the solid content of the modified PVA and the solid content in terms of $SiO_2$ (solid content by weight of the modified PVA/solid content by weight in terms of $SiO_2$) was adjusted to 20/80.

[Example 8]

A laminate was obtained in the same manner as in Example 7 except that the inorganic component solution was as follows.

<Inorganic component solution>

An inorganic component solution was obtained in the same manner as in Example 2 except that the weight ratio of the solid contents in terms of $SiO_2$ between the hydrolyzed solution of ethyl silicate pentamer and the hydrolyzed solution of TEOS was 80/20.

[Example 9]

A laminate was obtained in the same manner as in Example 7 except that the inorganic component solution was as follows.

<Inorganic component solution>

An inorganic component solution was obtained in the same manner as in Example 8 except that the linear polysiloxane used was Methyl Silicate 51 manufactured by Colcoat Co., Ltd. (methyl silicate oligomer, tetramer on average).

[Example 10]

A laminate was obtained in the same manner as in Example 7 except that the inorganic component solution was as follows.

<Inorganic component solution>

An inorganic component solution was obtained in the same manner as in Example 8 except that the linear polysiloxane used was Methyl Silicate 53A manufactured by Colcoat Co., Ltd. (methyl silicate oligomer, heptamer on average).

[Example 11]

A laminate was obtained in the same manner as in Example 7 except that the inorganic component solution was as follows.

<Inorganic component solution>

An inorganic component solution was obtained in the same manner as in Example 8 except that the linear polysiloxane used was Ethyl Silicate 48 manufactured by Colcoat Co., Ltd. (ethyl silicate oligomer, decamer on average).

[Example 12]

A laminate was obtained in the same manner as in Example 11 except that the drying temperature in the step for organic-inorganic mixed layer formation was 150°C.

[Example 13]

The laminate prepared in Example 12 was further heat-treated at 80°C for 1 week to obtain a laminate.

[Example 14]

A laminate was obtained in the same manner as in Example 13 except that the drying temperature in the step for organic-inorganic mixed layer formation was 180°C

[Example 15]

A laminate was obtained in the same manner as in Example 14 except that coating was performed to realize an average thickness T as specified in Table 1.

[Example 16]

A laminate was obtained in the same manner as in Example 15 except that the organic component solution was as follows.

<Solution of organic component>

A modified polyvinyl alcohol containing an isocyanuric acid structure having a carbonyl group in its cyclic structure (polymerization degree 1,700, saponification degree 93.0%), used as the vinyl alcohol based resin, was poured in a solvent consisting of water and isopropyl alcohol mixed at 97/3 by weight, and heated and stirred at 90°C to obtain an organic component solution having a solid content 10 wt%.

[Example 17]

A laminate was obtained in the same manner as in Example 15 except that the organic component solution was as follows.

<Solution of organic component>

A modified polyvinyl alcohol containing an γ-lactam structure having a carbonyl group in its cyclic structure (polymerization degree 1,700, saponification degree 93.0%), used as the vinyl alcohol based resin, was poured in a solvent consisting of water and isopropyl alcohol mixed at 97/3 by weight, and heated and stirred at 90°C to obtain an organic component solution having a solid content 10 wt%.

[Example 18]

A laminate was obtained in the same manner as in Example 15 except that the inorganic compound layer was as follows.

<Inorganic compound layer>

A biaxially oriented polyethylene terephthalate film having a thickness of 12 μm (Lumirror (registered trademark) P60, manufactured by Toray Industries, Inc.) was used as the base film, and an aluminum layer having a thickness of 50 nm was formed by vacuum evaporation to provide an inorganic compound layer.

The components and gas barrier properties of the laminate of each example are shown in Tables 1 and 2.

[Comparative Example 1]

When evaluation was performed only on a base film that is free of free of an organic-inorganic mixed layer but provided with the same inorganic compound layer as in Example 1, both the gas barrier properties of the laminate and the gas barrier properties after retorting treatment were inferior in performance.

[Comparative Example 2]

When evaluation was performed only on a laminate composed of a biaxially oriented polyethylene terephthalate film having a thickness of 12 μm (Lumirror (registered trademark) P60, manufactured by Toray Industries, Inc.), used as the base film, that is free of an inorganic layer but provided with an organic-inorganic mixed layer that was formed by the same procedure as in Example 1, results showed that the laminate had inferior gas barrier properties, and therefore, retorting treatment was not performed.

[Comparative Example 3]

A laminate was obtained in the same manner as in Example 1 except that the organic component solution was

as follows. The organic component of the protective layer in this laminate contained a γ-butyrolactone structure having a carbonyl group in its cyclic structure, but it was formed of an acrylic resin rather than a vinyl resin. Both the gas barrier properties of the laminate and the gas barrier properties after retorting treatment were inferior in performance.

<Solution of organic component>

A modified polymethyl methacrylate having a γ-lactam structure having a carbonyl group in its cyclic structure, used as the acrylic resin, was put in a solvent composed of ethyl acetate and cyclohexanone mixed at 95/5 by weight to obtain an organic component solution having a solid content of 10 wt%.

[Comparative Example 4]

A laminate was obtained in the same manner as in Example 1 except that the organic component solution was as follows. The organic component of the protective layer in this laminate was formed of a vinyl alcohol based resin containing an acetyl group having a carbonyl group but not having a cyclic structure. Both the gas barrier properties of the laminate and the gas barrier properties after retorting treatment were inferior in performance.

<Solution of organic component>

APVA with a low saponification degree (polymerization degree 1,700, saponification degree 88%) containing an acetyl group having a carbonyl group but not having a cyclic structure, used as the vinyl alcohol based resin, was put in a solvent consisting of water and isopropyl alcohol mixed at 97/3 by weight, and heated and stirred at 90°C to obtain an organic component solution having a solid content of 10 wt%.

[Comparative Example 5]

A laminate was obtained in the same manner as in Example 1 except that the organic component solution was as follows. The organic component of the protective layer in this laminate was formed of a vinyl alcohol based resin having a cyclic compound structure but not having a carbonyl group in the cyclic structure. Both the gas barrier properties of the laminate and the gas barrier properties after retorting treatment were inferior in performance.

<Solution of organic component>

A modified polyvinyl alcohol containing a tetrahydrofurfuryl structure having a cyclic structure but not having a carbonyl group (polymerization degree 1,700, saponification degree 93.0%), used as the vinyl alcohol based resin, was put in a solvent consisting of water and isopropyl alcohol mixed at 97/3 by weight, and heated and stirred at 90°C to obtain an organic component solution having a solid content 10 wt%.

[Comparative Example 6]

A laminate was obtained in the same manner as in Example 2 except that the organic component solution and the organic-inorganic mixed layer were as follows.

<Solution of organic component>

A polyvinyl alcohol (polymerization degree 1,700, saponification degree 98.5%), used as the vinyl alcohol based resin, was put in a solvent consisting of water and isopropyl alcohol mixed at 97/3 by weight, and heated and stirred at 90°C to obtain a PVA solution having a solid content 10 wt%.

<Organic-inorganic mixed layer>

A PVA solution and an inorganic component solution were mixed and stirred so that the weight ratio between the solid content of the PVA and the solid content in terms of $SiO_2$ (solid content by weight of the PVA/solid content by weight in terms of $SiO_2$) would be 85/15, followed by dilution with water to obtain a coating solution having a solid content of 12 wt%. This coating solution was applied on the inorganic compound layer and dried at normal temperature to form an organic-inorganic mixed layer, thereby obtaining a laminate.

When the laminate was evaluated, the vinyl alcohol based resin used was an unmodified polyvinyl alcohol and the value of ($\nu 1/\nu 2$)/T of the organic-inorganic mixed layer was found to be less than the lower limit value, leading to

results showing that both the gas barrier properties of the laminate and the gas barrier properties after retorting treatment were inferior in performance.

[Comparative Example 7]

A laminate was obtained in the same manner as in Comparative Example 6 except that the inorganic component solution and the coating solution for organic-inorganic mixed layer formation were as follows and that the drying temperature in the organic-inorganic mixed layer formation step was 200°C.

<Inorganic component solution>

An inorganic component solution was obtained in the same manner as in Example 2 except that the weight ratio of the solid contents in terms of $SiO_2$ between the hydrolyzed solution of silicate pentamer and the hydrolyzed solution of TEOS was 50/50.

<Organic-inorganic mixed layer>

The weight ratio between the solid content of the PVA and the solid content in terms of $SiO_2$ (solid content by weight of the PVA/solid content by weight in terms of $SiO_2$) was adjusted to 65/35.

When evaluation of the laminate was performed, the vinyl alcohol based resin used was an unmodified polyvinyl alcohol and the value of ($\nu 1/\nu 2$)/T of the organic-inorganic mixed layer was found to be more than the upper limit value, leading to generation of many cracks in the laminate to make the gas barrier properties evaluation impossible.

The components and gas barrier properties of the laminate of each comparable example are shown in Tables 3 and 4.

[Table 1]

[Table 1]

| | Inorganic compound layer | Protective layer | | | | Solid content ratio (by weight) of organic component/ Inorganic component (in terms of $SiO_2$) | Mixing ratio (A2/A1) of linear polysiloxane/ metal alkoxide alkoxysilane | Drying temperature (°C) | Heat treatment | Average thickness T of organic-inorganic mixed layer (nm) | (ν1/ν2)/T equation (1) |
|---|---|---|---|---|---|---|---|---|---|---|---|
| | | Organic component | | Inorganic component | | | | | | | |
| | | | Cyclic compound structure having carbonyl group in cyclic structure | Silicate based linear polysiloxane | Metal alkoxide alkoxysilane | | | | | | |
| Example 1 | aluminum oxide | modified PVA | γ-butyrolactone | ethyl silicate (pentamer) | none | 85/15 | - | 130°C | none | 954 | 0.009 |
| Example 2 | aluminum oxide | modified PVA | γ-butyrolactone | ethyl silicate (pentamer) | TEOS | 85/15 | 15/85 | 130°C | none | 950 | 0.007 |
| Example 3 | aluminum oxide | modified PVA | γ-butyrolactone | ethyl silicate (pentamer) | TEOS | 15/85 | 90/10 | 130°C | none | 20 | 0.028 |
| Example 4 | aluminum oxide | modified PVA | γ-butyrolactone | ethyl silicate (pentamer) | TEOS | 20/80 | 90/10 | 130°C | none | 95 | 0.026 |
| Example 5 | aluminum oxide | modified PVA | γ-butyrolactone | ethyl silicate (pentamer) | TEOS | 65/35 | 50/50 | 130°C | none | 691 | 0.011 |
| Example 6 | aluminum oxide | modified PVA | γ-butyrolactone | ethyl silicate (pentamer) | TEOS | 35/65 | 85/15 | 130°C | none | 103 | 0.024 |
| Example 7 | aluminum oxide | modified PVA | γ-butyrolactone | ethyl silicate (pentamer) | TEOS | 20/80 | 60/40 | 130°C | none | 578 | 0.014 |
| Example 8 | aluminum oxide | modified PVA | γ-butyrolactone | ethyl silicate (pentamer) | TEOS | 20/80 | 80/20 | 130°C | none | 502 | 0.021 |
| Example 9 | aluminum oxide | modified PVA | γ-butyrolactone | methyl silicate (tetramer) | TEOS | 20/80 | 80/20 | 130°C | none | 500 | 0.013 |
| Example 10 | aluminum oxide | modified PVA | γ-butyrolactone | methyl silicate (heptamer) | TEOS | 20/80 | 80/20 | 130°C | none | 511 | 0.014 |
| Example 11 | aluminum oxide | modified PVA | γ-butyrolactone | ethyl silicate (decamer) | TEOS | 20/80 | 80/20 | 130°C | none | 346 | 0.018 |

(continued)

| | Inorganic compound layer | Protective layer | | | | Solid content ratio (by weight) of organic component/ Inorganic component (in terms of $SiO_2$) | Mixing ratio (A2/A1) of linear polysiloxane/ metal alkoxide alkoxysilane | Drying temperature (°C) | Heat treatment | Average thickness T of organic-inorganic mixed layer (nm) | ($\nu$1/$\nu$2)/T equation (1) |
|---|---|---|---|---|---|---|---|---|---|---|---|
| | | Organic component | | Inorganic component | | | | | | | |
| | | | Cyclic compound structure having carbonyl group in cyclic structure | Silicate based linear polysiloxane | Metal alkoxide alkoxysilane | | | | | | |
| Example 12 | aluminum oxide | modified PVA | γ-butyrolactone | ethyl silicate (decamer) | TEOS | 20/80 | 80/20 | 150°C | none | 489 | 0.016 |
| Example 13 | aluminum oxide | modified PVA | γ-butyrolactone | ethyl silicate (decamer) | TEOS | 20/80 | 80/20 | 150°C | 80°C for 1 week | 489 | 0.017 |
| Example 14 | aluminum oxide | modified PVA | γ-butyrolactone | ethyl silicate (decamer) | TEOS | 20/80 | 80/20 | 180°C | 80°C for 1 week | 489 | 0.019 |
| Example 15 | aluminum oxide | modified PVA | γ-butyrolactone | ethyl silicate (decamer) | TEOS | 20/80 | 80/20 | 180°C | 80°C for 1 week | 355 | 0.020 |
| Example 16 | aluminum oxide | modified PVA | isocyanuric acid | ethyl silicate (decamer) | TEOS | 20/80 | 80/20 | 180°C | 80°C for 1 week | 355 | 0.020 |
| Example 17 | aluminum oxide | modified PVA | γ-lactam | ethyl silicate (decamer) | TEOS | 20/80 | 80/20 | 180°C | 80°C for 1 week | 355 | 0.020 |
| Example 18 | aluminum | modified PVA | γ-butyrolactone | ethyl silicate (decamer) | TEOS | 20/80 | 80/20 | 180°C | 80°C for 1 week | 358 | 0.020 |

[Table 2]

[Table 2]

| | Gas barrier properties of laminate | | Gas barrier properties after retorting treatment | |
|---|---|---|---|---|
| | Water vapor transmission rate (g/(m$^2$ day)) | Oxygen transmission rate (cc/(m$^2$ day)) | Water vapor transmission rate (g/(m$^2$ day)) | Oxygen transmission rate (cc/(m$^2$ day)) |
| Example 1 | 0.90 | 0.72 | 1.28 | 0.96 |
| Example 2 | 0.88 | 0.69 | 1.22 | 0.92 |
| Example 3 | 0.94 | 0.87 | 1.34 | 1.05 |
| Example 4 | 0.86 | 0.67 | 1.16 | 0.92 |
| Example 5 | 0.79 | 0.60 | 0.99 | 0.73 |
| Example 6 | 0.82 | 0.70 | 1.01 | 0.74 |
| Example 7 | 0.71 | 0.58 | 0.90 | 0.68 |
| Example 8 | 0.63 | 0.41 | 0.82 | 0.50 |
| Example 9 | 0.75 | 0.59 | 0.94 | 0.72 |
| Example 10 | 0.59 | 0.40 | 0.80 | 0.49 |
| Example 11 | 0.45 | 0.30 | 0.74 | 0.35 |
| Example 12 | 0.43 | 0.24 | 0.77 | 0.33 |
| Example 13 | 0.32 | 0.16 | 0.71 | 0.31 |
| Example 14 | 0.29 | 0.13 | 0.63 | 0.29 |
| Example 15 | 0.24 | 0.14 | 0.59 | 0.25 |
| Example 16 | 0.25 | 0.13 | 0.54 | 0.26 |
| Example 17 | 0.25 | 0.13 | 0.62 | 0.26 |
| Example 18 | less than 0.1 | less than 0.1 | 0.69 | 0.44 |

[Table 3]

[Table 3]

| | Inorganic compound layer | Protective layer | | | | Solid content ratio (weight ratio) of organic component! inorganic component (in terms of $SiO_2$) | Mixing ratio (A2/A1) of linear polysiloxane/ metal alkoxide alkoxysilane | Drying temperature (°C) | Heat treatment | Average thickness T of organic inorganic mixed layer (nm) | (v 1/v2)/T equation (1) |
|---|---|---|---|---|---|---|---|---|---|---|---|
| | | Organic component | | Inorganic component | | | | | | | |
| | | | Cyclic compound structure having carbonyl group in cyclic structure | Silicate based linear polysiloxane | Metal alkoxide alkoxysilane | | | | | | |
| Comparative example 1 | aluminum oxide | - | - | - | - | - | - | - | - | - | - |
| Comparative example 2 | - | modified PVA | γ-butyrolactone | ethyl silicate (pentamer) | none | 85/15 | - | 130°C | none | 953 | 0.009 |
| Comparative example 3 | aluminum oxide | modified PMMA | γ-lactam | ethyl silicate (pentamer) | none | 85/15 | - | 130°C | none | 953 | 0.009 |
| Comparative example 4 | aluminum oxide | PVA with low saponification degree | (carbonyl group only) | ethyl silicate (pentamer) | none | 85/15 | - | 130°C | none | 953 | 0.009 |
| Comparative example 5 | aluminum oxide | modified PVA | tetrahydrofurfuryl | ethyl silicate (pentamer) | none | 85/15 | - | 130°C | none | 953 | 0.009 |
| Comparative example 6 | aluminum oxide | PVA | none | ethyl silicate (pentamer) | TEOS | 85/15 | 15/85 | normal temperature | none | 950 | 0.004 |
| Comparative example 7 | aluminum oxide | PVA | none | ethyl silicate (pentamer) | TEOS | 65/35 | 50/50 | 200°C | none | 691 | 0.034 |

[Table 4]

[Table 4]

| | Gas barrier properties of laminate | | Gas barrier properties after retorting treatment | |
|---|---|---|---|---|
| | Water vapor transmission rate (g/($m^2$ day)) | Oxygen transmission rate (cc/($m^2$ day)) | Water vapor transmission rate (g/($m^2$ day)) | Oxygen transmission rate (cc/($m^2$ day)) |
| Comparative example 1 | 1.8 | 2.0 or more | 3.0 or more | 3.0 or more |
| Comparative example 2 | 3.0 or more | 3.0 or more | not performed | not performed |
| Comparative example 3 | 1.8 | 2.0 or more | 3.0 or more | 3.0 or more |
| Comparative example 4 | 1.8 | 1.9 | 3.0 or more | 3.0 or more |
| Comparative example 5 | 1.8 | 1.9 | 3.0 or more | 3.0 or more |
| Comparative example 6 | 1.7 | 2.0 or more | 3.0 or more | 3.0 or more |
| Comparative example 7 | crack | crack | not performed | not performed |

## Claims

1. A laminate comprising a base film in combination with an inorganic compound layer and a protective layer formed in this order on at least one side of the base film, the protective layer containing a vinyl alcohol based resin, **characterised in that**

   the vinyl alcohol based resin contains a cyclic compound structure having a carbonyl group in the cyclic structure,
   the protective layer is an organic-inorganic mixed layer containing a linear polysiloxane, and
   when the protective layer is examined by the FT-IR method, the value given by equation (1) wherein $\nu 1$ represents the peak intensity attributed to Si-O-Si bonding, v2 the peak intensity attributed to Si-OH bonding, and T (nm) the average thickness of the protective layer, is 0.005 or more and 0.030 or less:

   $$(\nu 1/\nu 2) / T \qquad \text{equation (1)}$$

   wherein $\nu 1$ is the intensity of the peak in the range from 1,050 to 1,090 $cm^{-1}$, and
   v2 is the intensity of the peak in the range from 950 to 970 $cm^{-1}$,
   wherein $\nu 1$, v2 and T are measured by the methods described in the description.

2. A laminate as set forth in claim 1, wherein the vinyl alcohol based resin contains a lactone structure.

3. A laminate as set forth in claim 1 or 2, wherein the average thickness T of the protective layer is 10 nm or more and 1,000 nm or less.

4. A laminate as set forth in any one of claims 1 to 3, wherein the inorganic compound layer contains aluminum oxide.

5. A sealing member comprising a laminate as set forth in any one of claims 1 to 4.

## Patentansprüche

1. Laminat, umfassend einen Basisfilm in Kombination mit einer Schicht einer anorganischen Verbindung und einer Schutzschicht, die in dieser Reihenfolge auf zumindest einer Seite des Basisfilms ausgebildet sind, wobei die Schutzschicht ein Harz auf Vinylalkoholbasis enthält,
**dadurch gekennzeichnet, dass**:

   das Harz auf Vinylalkoholbasis eine zyklische Verbindungsstruktur mit einer Carbonylgruppe in der zyklischen Struktur enthält, wobei die Schutzschicht eine organisch-anorganische Mischschicht ist, die ein unverzweigtes Polysiloxan enthält, und wenn die Schutzschicht durch das FT-IR-Verfahren untersucht wird, der durch Gleichung (1) angegebene Wert, worin v1 die Peak-Intensität ist, die der Si-O-Si-Bindung zugeschrieben wird, v2 die Peak-Intensität ist, die der Si-OH-Bindung zugeschrieben wird, und T(nm) die durchschnittliche Dicke der Schutzschicht ist, 0,005 oder mehr und 0,030 oder weniger beträgt:

$$(\nu 1/\nu 2)/T \qquad \text{Gleichung (1)}$$

   worin v1 die Intensität des Peaks im Bereich von 1.050 bis 1.090 $cm^{-1}$ ist und
   v2 die Intensität des Peaks im Bereich von 950 bis 970 $cm^{-1}$ ist,
   worin v1, v2 und T durch die in der Beschreibung beschriebenen Verfahren gemessen werden.

2. Laminat wie in Anspruch 1 dargelegt, wobei das Harz auf Vinylalkoholbasis eine Lactonstruktur enthält.

3. Laminat wie in Anspruch 1 oder 2 dargelegt, wobei die durchschnittliche Dicke T der Schutzschicht 10 nm oder mehr und 1.000 nm oder weniger beträgt.

4. Laminat wie in einem der Ansprüche 1 bis 3 dargelegt, wobei die Schicht der anorganischen Verbindung Aluminiumoxid umfasst.

5. Dichtungselement, umfassend ein Laminat wie in einem der Ansprüche 1 bis 4 dargelegt.

## Revendications

1. Stratifié comprenant un film de base en combinaison avec une couche de composé inorganique et une couche protectrice formées dans cet ordre sur au moins un côté du film de base, la couche protectrice contenant une résine à base d'alcool vinylique,
**caractérisé en ce que**

   la résine à base d'alcool vinylique contient une structure de composé cyclique présentant un groupe carbonyle dans la structure cyclique, la couche protectrice est une couche mixte organique-inorganique contenant un polysiloxane linéaire, et lorsque la couche protectrice est examinée par la méthode FT-IR, la valeur donnée par l'équation (1) dans laquelle v1 représente l'intensité de pic attribuée à la liaison Si-O-Si, v2 l'intensité de pic attribuée à la liaison Si-OH, et T (nm) l'épaisseur moyenne de la couche protectrice, est de 0,005 ou plus et de 0,030 ou moins :

$$(\nu 1/\ \nu 2)/\text{équation T} \quad (1)$$

   dans lequel ν1 est l'intensité du pic dans la plage allant de 1 050 à 1 090 $cm^{-1}$, et
   dans lequel v2 est l'intensité du pic dans la plage allant de 950 à 970 $cm^{-1}$, et
   dans lequel ν1, v2 et T sont mesurés par les procédés décrits dans la description.

2. Stratifié selon la revendication 1, dans lequel la résine à base d'alcool vinylique contient une structure de lactone.

3. Stratifié selon la revendication 1 ou 2, dans lequel l'épaisseur moyenne T de la couche protectrice est de 10 nm ou plus et de 1 000 nm ou moins.

4. Stratifié selon l'une quelconque des revendications 1 à 3, dans lequel la couche de composé inorganique contient de l'oxyde d'aluminium.

5. Élément d'étanchéité comprenant un stratifié tel que défini dans l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170009034 A1
- JP 2013202822 A
- JP 2015193193 A
- JP 2008264998 A
- JP 2007290292 A
- JP 2010533760 W
- JP 2003105154 A
- JP HEI8151411 A

### Non-patent literature cited in the description

- **SATORU IWAMORI.** Kobunshi Hyomen Kako-Gaku. *Polymer Surface Processing,* 118-119